Europäisches Patentamt

European Patent Office

Office européen des brevets

(19)

(11) Veröffentlichungsnummer : **0 458 804 B1**

# (12) EUROPÄISCHE PATENTSCHRIFT

(45) Veröffentlichungstag der Patentschrift :
19.05.93 Patentblatt 93/20

(51) Int. Cl.⁵ : **B01J 20/26**

(21) Anmeldenummer : **90902224.6**

(22) Anmeldetag : **01.02.90**

(86) Internationale Anmeldenummer :
**PCT/EP90/00175**

(87) Internationale Veröffentlichungsnummer :
**WO 90/09236 23.08.90 Gazette 90/20**

(54) **BINDEMITTEL FÜR FLÜSSIGKEITEN.**

(30) Priorität : **16.02.89 DE 3904642**

(43) Veröffentlichungstag der Anmeldung :
**04.12.91 Patentblatt 91/49**

(45) Bekanntmachung des Hinweises auf die
Patenterteilung :
**19.05.93 Patentblatt 93/20**

(84) Benannte Vertragsstaaten :
**BE CH DE ES FR GB IT LI NL**

(56) Entgegenhaltungen :
EP-A- 0 077 510
EP-A- 0 088 533
EP-A- 0 122 042
EP-A- 0 157 960
EP-A- 0 278 601
EP-A- 0 290 814
WO-A-86/04910
GB-A- 1 570 485
GB-A- 2 162 525

(73) Patentinhaber : **CASSELLA Aktiengesellschaft
Hanauer Landstrasse 526
W-6000 Frankfurt am Main 61 (DE)**

(72) Erfinder : **GÖBEL, Gerd
Jakobsbrunnenstrasse 16
W-6000 Frankfurt am Main 61 (DE)**
Erfinder : **ANGERER, Ferdinand
Brandenburger Strasse 5
W-6117 Schaafheim (DE)**
Erfinder : **RIEGEL, Ulrich
Steinäcker Strasse 6
W-6000 Frankfurt am Main 61 (DE)**

(74) Vertreter : **Urbach, Hans-Georg, Dr. et al
CASSELLA AKTIENGESELLSCHAFT,
Patentabteilung, Hanauer Landstrasse 526
W-6000 Frankfurt am Main 60 (DE)**

EP 0 458 804 B1

**Beschreibung**

Ein häufig auftretendes Problem ist, auslaufende, flüssige umweltgefährdende Stoffe so zu binden, daß ein tieferes Eindringen in das Erdreich oder ein Abfließen in die Kanalisation oder Flüsse, gleichbedeutend mit Verschmutzung und Gefährdung von Grund- und Oberflächenwasser, vermieden werden kann.

Bekannte herkömmliche Bindemittel zur lokalen Begrenzung einer Kontamination sind Sand, Torf, Sägespäne oder dergleichen.

Mischungen von Alkali- bzw. Erdalkalicarbonaten mit Kieselgur und Eisenoxid sind als sogenannte Chemikalienbinder, insbesondere bei Feuerwehren, bekannt. Weitere bekannte Bindemittel für Öle sind Kunststoffschäume aus beispielsweise Polyurethan, insbesondere gemahlene PV-Schäume, Kondensationsprodukte auf Basis Phenol-Formaldehyd-Schwefelsäure und beispielsweise Fasern und Matten aus Polyethylen.

Zum Binden wäßriger Flüssigkeiten sind weiterhin sogenannte Superabsorber bekannt.

Alle Systeme, die sich zur Zeit im Einsatz befinden, weisen zum Teil schwerwiegende Nachteile auf. So sind beispielsweise Binder, die Carbonate enthalten, völlig ungeeignet für den Eisatz in sauren Lösungen, da sie infolge einer $CO_2$-Abspaltung sogar explosionsartig reagieren können. Bei unsachgemäßer Handhabung oder Einsatz des falschen Bindemittels kann ein Schadensfall gegebenenfalls sogar vergrößert und verschlimmert werden. Sämtliche guten Binder für wäßrige Lösungen zeigen ein ungenügendes Bindevermögen bei nicht wäßrigen Lösungen, während nahezu alle guten Binder für nicht wäßrige Lösungen ungenügende oder gar keine Saugkapazität bei wäßrigen Systemen haben.

Ein weiterer Nachteil bei einigen bekannten Bindern ist deren niedrige Dichte, was zur Folge hat, daß sie auf der zu ab(ad)sorbierenden Flüssigkeit schwimmen und erst mechanisch eingerührt werden müssen, um voll wirksam zu sein. Des weiteren neigen derartige Produkte zu starkem Stauben, wodurch zum einen daß Einsatzpersonal verstärkten Gefahren ausgesetzt ist, zum anderen auch bereits leicht kontaminiertes Material infolge Windeinwirkung verblasen werden und damit eine weitflächige Kontaminierung eintreten kann.

Absorbenzien, welche vernetzte hydrophile Polymere und Faserfüllstoff enthalten, sind aus EP-A-0 088533 bekannt. Dispersionen von Superabsorbern mit Polyäthylenglycol, als solche oder auf fasrigem Gewebe als Substrat in verwenden, sind in EP-A-0 157 960 offenbart.

Der schwerstwiegende Nachteil aller dem Stand der Technik entsprechenden Binder für flüssige Medien ist also deren ungenügende Eignung für den universellen Einsatz.

Aufgabe vorliegender Erfindung ist es deshalb, ein Bindemittel für Flüssigkeiten hereitzustellen, das die genannten Nachteile nicht aufweist, insbesondere universell einsetzbar ist und falsche Handhabung ausschließt.

Diese Aufgabe wird überraschenderweise gelöst durch ein streufähiges Bindemittel zum Binden ausgelaufener Flüssigkeiten, dadurch gekennzeichnet, daß es

a) Superabsorber, das heißt Hydrogele bildende Polymere,
b) Verbindungen mit großer Oberflächenstruktur und/oder kapillarem und/oder faserigem Aufbau sowie
c) Polyglykol

enthält, wobei der Gehalt an Polyglycol bis zu 30 Gew.% beträgt.

Bevorzugte Superabsorber sind solche, die durch Polymerisation von olefinischen Monomeren, wie beispielsweise Acrylsäure, Acrylsäureamid, Methacrylsäure, Methacrylsäureamid, Vinylsulfonsäure, Maleinsäure, Fumarsäure, Crotonsäure, 2-Acrylamido-2-methyl-propansulfonsäure, 2-Acrylamido-2-methyl-propanphosphonsäure und Vinylphosphonsäure und/oder deren Halbester und/oder Salze der genannten Säuren, in Gegenwart von bis zu 2 Gew.% mehrfunktioneller Epoxide oder monomerer mit mindestens zwei olefinisch ungesättigten Doppelbindungen, wie beispielsweise Bisacrylamidoessigsäure, Trimethylolpropantriacrylat und/oder Tetraalkyloxyethan, entstehen.

Besonders bevorzugt sind Superabsorber, die durch Polymerisation von Acrylsäureamid und/oder Acrylsäure und/oder einem Salz davon in Gegenwart von bis zu 2 Gew.% Bisacrylamidoessigsäure, Trimethylolpropantriacrylat und/oder Tetraallyloxyethan hergestellt sind.

Verbindungen mit großer Oberflächenstruktur und/oder kapillarem und/oder faserigem Aufbau können anorganischer oder organischer Natur, natürlichen Ursprungs oder synthetisch hergestellt sein.

Bevorzugte Verbindungen dieser Art sind beispielsweise Kieselgur, Torf, Sägespäne, Holzmehl, Holzwolle, Stroh, Papierfasern, Zellstoff oder Kunststoffe in faseriger oder gemahlener Form, wie beispielsweise Polyethylen-Faserfüllstoff, Polyethylen-Fluff oder gemahlener Polyurethanschaum, wobei die genannten Stoffe auch im Gemisch untereinander eingesetzt werden können.

Die erfindungsgemäßen Bindemittel enthalten den Superabsorber sowie die Verbindung mit großer Oberflächenstruktur normalerweise in Mengen von jeweils 10-90 Gew.%, bevorzugt 30-70 Gew.%.

Der Gehalt an Polyglykol beträgt bis zu 30 Gew.%, besonders bevorzugt bis zu 20 Gew.%. Durch das Polyglykol kann ein eventuelles Stauben des Bindemittels vermieden werden, was insbesondere bei Anwendung im Freien unter starker Windeinwirkung vorteilhaft ist.

Bevorzugte Polyglykole sind solche, die einen Schmelzpunkt kleiner als 20°C haben, das heißt im wesentlichen Polyglykole bis zu einem Molekulargewicht von 500.

Das erfindungsgemäße Bindemittel kann gegebenenfalls noch weitere Additive enthalten.

Soll das Bindemittel zum Abstreuen von Verkehrsflächen verwendet werden, so werden bevorzugt als abstumpfendes Mittel bis zu 30 Gew.%, besonders bevorzugt, bis zu 20 Gew.%, grobkörnige, scharfkantige Materialen, wie Sand, Split oder vorzugsweise gebrochener Blähton zugemischt, um die Rutschfestigkeit zu erhöhen.

Die erfindungsgemäßen Bindemittel können hergestellt werden durch Abmischen der einzelnen Komponenten im gewünschten Mischungsverhältnis.

Falls die genannte Methode nur zu einer ungenügenden Homogenität des Produktes führt, oder die Verbindung mit großer Oberflächenstruktur ein sehr niedriges Schüttgewicht hat, kann diese auch bereits dem mechanisch zerkleinerten, wasserhaltigen Superabsorber-Rohprodukt, das durch Gelpolymerisation erhalten wurde, vor dessen Trocknung in entsprechender Menge zugemischt und die Mischung verknetet, getrocknet und gemahlen und gegebenenfalls weitere Komponenten zugemischt werden.

Schließlich kann das erfindungsgemäße Bindemittel auch hergestellt werden, indem man die Verbindung mit großer Oberflächenstruktur der Monomerlösung des Superabsorbers zumischt, nach dem Verfahren der Gelpolymerisation polymerisiert und das erhaltene Produkt trocknet und mahlt und gegebenenfalls weitere Komponenten zumischt.

Die erfindungsgemäßen Bindemittel können zum Binden flüssiger Medien in verschiedenen Formen angewendet werden, so zum Beispiel in purer Form durch Aufschütten eines Walles, durch Ein- oder Aufstreuen, was manuell oder mit hilfe eines Streuwagens geschehen kann, durch Verblasen oder zum Abdichten von Sperrschichten. Es ist aber auch eine Anwendung in eingearbeiteter Form, wie z.B. in Vliesen, Geweben oder perforierten Folien in Sack-, Strang- oder Wurstform oder in großflächigen, perforierten, steppförmigen Matten oder eingepreßt in Pellets möglich.

Besonders vorteilhaft ist es auch, die erfindungsgemäßen Bindemittel mit hilfe eines Druckbehälters, wie er beispielsweise bequem bei Gefahrentransporten mitgeführt werden kann, auf die zu bindende Flüssigkeit aufzublasen.

Die geschilderten Einsatzformen sind auch bei Windeinwirkung und unabhängig von Temperatureinflüssen ohne Verlust von Effektivität einsetzbar.

Die erfindungsgemäßen Bindemittel sind universell zum Binden sowohl von wäßrigen, sauren oder alkalischen als auch von nichtwäßrigen Flüssigkeiten oder deren Mischungen untereinander geeignet und entfalten ihre Bindewirkung bereits durch bloßes Aufstreuen ohne mechanische Hilfe. Es ist auch als besonders vorteilhaft zu bezeichnen, daß verbrauchter Binder von der Fläche, auf die er aufgestreut wurde, sehr leicht und ohne Rückstände zu hinterlassen wieder entfernt werden kann. Dies kann manuell oder mit hilfe von Industriesaugern oder Saugpumpen geschehen.

Im Unterschied zu herkömmlichen Bindemitteln können wäßrige Flüssigkeiten durch mechanische Einwirkungen nicht aus den erfindungsgemäßen Bindemiteln herausgepreßt werden.

Nach dem Entfernen von verbrauchten erfindungsgemäßen Bindemitteln von kontaminiertem Erdreich kann durch nochmaliges Aufstreuen von unverbrauchtem Bindemittel eine weitere Menge Chemikalien aus dem Erdreich entfernt werden. Es ist somit möglich, mit den erfindungsgemäßen Bindemitteln eine Langzeitentsorgung auch großer Flächen durchzuführen, wenn diese zusätzlich mit wasserundurchlässigen Folien abgedeckt werden. Auf diesem Wege können auch radioaktive Stoffe von Flächen und Erdreich entfernt werden.

Die erfindungsgemäßen Bindemittel können auch zum Aufbau einer Dampfsperre verwendet werden. Das heißt, beim Aufstreuen auf giftige bzw starkriechende Medien entweichen weniger gefährliche bzw. riechende Dämpfe als bei bekannten Bindemitteln, so daß das Einsatzpersonal näher und gefahrloser am Gefahrenort arbeiten kann. Dies gilt insbesondere auch für Salzsäure und andere an der Luft stark rauchende Stoffe.

Die erfindungsgemäßen Bindemittel sind nicht brandfördernd. Superabsorber haben einen Flammpunkt von über 200°C, während die Verbindungen mit großer Oberflächenstruktur größtenteils nicht brennbar sind.

Die erfindungsgemäßen Bindemittel stellen einen erheblichen Fortschritt bei der Verhinderung oder Eindämmung von Schäden, die durch auslaufende Flüssigkeiten entstehen, dar.

Die folgenden Beispiele erläutern die vorliegende Erfindung:

Beispiel 1

60 g Kieselgur und 40 g ®Tylose VS 3746 (Superabsorber auf Polyacrylatbasis; ®Tylose ist ein eingetragenes Warenzeichen der Hoechst AG, Frankfurt am Main) werden bis zur vollständigen homogenität gemischt.

Beispiel 2

Beispiel 1 wird mit 55 g Kieselgur, 36 g ®Tylose VS 3746 und 9 g Polyethylenglykol 200 wiederholt.

Beispiel 3

In einem durch geschäumtes Kunststoffmaterial gut isolierten Gefäß werden 635 g Wasser und 180 g Natriumhydrogencarbonat vorgelegt und 240 g Acrylsäure so zudosiert, daß ein Überschäumen der Reaktionslösung vermieden wird, wobei sich diese auf eine Temperatur von 10 bis 8°C abkühlt. Es werden nun 1,5 g Natriumdiisooctylsulfosuccinat sowie eine Lösung aus 2 g GENAPOL® OX 130 (GENAPOL® ist ein eingetragenes Warenzeichen der hoechst AG, Frankfurt) und 2,5 g 1,1,1-Trimethylolpropantriacrylat zugegeben. Bei einer Temperatur von 8 - 10°C werden die Initiatoren, ein Redoxsystem, bestehend aus 0,2 g 2,2'-Azobisamidinopropan-dihydrochlorid, gelöst in 2,5 g Wasser, 0,6 g Kaliumperoxodisulfat, gelöst in 20 g Wasser, und 0,05 g Ascorbinsäure, gelöst in 10 g Wasser, nacheinander zugegeben und gut verrührt. Die Reaktionslösung wird ohne Rühren stehen gelassen, wobei durch einsetzende Polymerisation die Temperatur bis auf 80°C ansteigt und ein festes Gel entsteht.

1000 g des so erhaltenen Polymergels werden mechanisch zerkleinert, mit 245 g Polyethylen-Fluff versetzt, in einem Kneter homogen verknetet, anschließend bei Temperaturen über 80°C getrocknet und gemahlen.

Beispiel 4:

Beispiel 3 wird wiederholt, wobei 1000 g des Polymergels mit 300 g Zellstoff-Fluff versetzt werden.

Beispiel 5:

Wiederholung des Beispiels 3 mit 1000 g Polymergel und 200 g gemahlenem Polyurethanschaum.

Beispiel 6:

Wiederholung des Beispiels 3 mit 800 g Polymergel, 360 g Polyethylen-Fluff und zusätzlich 100 g Polyethylenglykol 300.

Beispiel 7:

Wiederholung des Beispiels 3 mit 1000 g Polymergel und 280 g Polyethylen-Faserfüllstoff einer Faserlänge von 1 - 6 cm.

Tabelle 1 demonstriert die universelle Verwendbarkeit der erfindungsgemäßen Bindemittel unter Einsatzbedingungen im Vergleich zu bekannten Bindemitteln. Dabei werden folgende Symbole verwendet:

++ = sehr gut

+ = gut

o = möglich

- = schlecht

-- = nicht einsatzfähig

Folgende Bindemittel werden verglichen:

A = Kieselgur, handelsüblich

B = Zellstoff Fluff, handelsüblich

C = ®Rench-Rapid, Firma Rench Rapid GmbH, Rechen; auf Basis Kondensationsprodukt Phenol-Formaldehyd-Schwefelsäure)

D = ®Metax 1713, Firma Chemital GmbH, Frankfurt/M.;

E = ®Ekoperl 99, Firma Eduard Michels GmbH, Essen; (®Metax und ®Ekoperl = Mischungen auf Basis Carbonat/Kieselgur/Eisenoxid)

F = ®Tylose 3746, Firma Hoechst AG, Frankfurt/Main;

G = erfindungsgemäßes Gemisch (Beispiel 2)

<div align="right">Tabelle 1</div>

|  | A | B | C | D | E | F | G |
|---|---|---|---|---|---|---|---|
| Streufähigkeit manuell | - | - | + | o | + | + | ++ |
| Streufähigkeit, Streuwagen | - | -- | o | - | o | + | ++ |
| Aufblasen durch Druckbehälter | -- | -- | -- | -- | -- | ++ | ++ |
| Verhalten bei Wind (Stauben und damit verbundene Flächenvergrößerung und Gefährdung des Einsatzpersonals) | - | - | - | - | + | ++ | ++ |
| Binden von Schadstoffen von Flächen und aus Erdreich | o | - | o | o | o | + | ++ |
| Bilden einer Dampfsperre | - | - | o | - | - | + | ++ |
| Aufstauen von Flüssigkeiten | - | - | - | - | o | + | ++ |
| Aufnahmefähigkeit für wäßrige Flüssigkeiten | + | - | -- | + | + | ++ | ++ |
| Aufnahmefähigkeit für nicht wäßrige Flüssigkeiten | + | + | ++[a] | + | o | - | + |
| Aufnahmefähigkeit von herabtropfenden Flüssigkeiten mit hohem spezifischen Gewicht | o | - | - | o | o | + | ++ |
| Verhalten gegen Oxidationsmittel | + | --[b] | --[b] | + | o | ++ | ++ |
| Verhalten gegen Säuren oder Laugen | ++ | - | +[c] | o[d] | o[d] | +[e] | ++[f] |
| Nichtbrennbarkeit | ++ | -[g] | -[h] | ++ | ++ | ++ | ++ |
| Entfernen des verbrauchten Binders: |  |  |  |  |  |  |  |
|   manuell | - | + | + | - | - | + | ++ |
|   mit Industriesauger | - | + | o | - | - | + | ++ |
|   mit Saugpumpen | o | - | o | o | - | o | ++ |

Erläuterungen:

a) Selbstentzündung bei Ölen möglich

b) Einsatz nicht erlaubt; explosionsartige Reaktionen möglich

c) Zersetzung mit Schwefelsäure mit mehr als 60°C

d) schlagartige Abspaltung von $CO_2$ möglich

e) Erwärmung auf weniger als 70°C mit konzentrierter Schwefelsäure

f) Erwärmung auf weniger als 50°C mit konzentrierter Schwefelsäure

g) Brandfördernd

h) brandfördernd, Abspaltung von $SO_2$ und eventuell Phenol und Formaldehyd

**Patentansprüche**

1. Streufähiges Bindemittel zum Binden ausgelaufener Flüssigkeiten, dadurch gekennzeichnet, daß es
   a) Superabsorber, das heißt Hydrogele bildende Polymere,
   b) Verbindungen mit großer Oberflächenstruktur und/oder kapillarem und/oder faserigem Aufbau sowie
   c) Polyglykol
   enthält, wobei der Gehalt an Superabsorber und Verbindung b) jeweils 10-90 Gew%, an Polyglykol bis zu 30Gew% beträgt.

2. Streufähiges Bindemittel gemäß Anspruch 1, dadurch gekennzeichnet, daß die Superabsorber durch Polymerisation von Acrylsäureamid und/oder Acrylsäure und/oder einem Salz davon in Gegenwart von bis zu 2 Gew.% Bisacrylamidoessigsäure, Trimethylolpropantriacrylat und/oder Tetraallyloxyethan hergestellt sind.

3. Streufähiges Bindemittel gemäß Anspruch 1 und/oder 2, dadurch gekennzeichnet, daß Verbindungen mit großer Oberflächenstruktur und/oder kapillarem und/oder faserigem Aufbau Kieselgur, Torf, Sägespäne, Holzmehl, Holzwolle, Stroh, Papierfasern, Zellstoff oder Kunststoffe in faseriger oder gemahlener Form, wie beispielsweise Polyethylen-Faserfüllstoff oder gemahlener Polyurethanschaum oder Gemische davon sind.

4. Streufähiges Bindemittel gemäß einem oder mehreren der Ansprüche 1 bis 3, dadurch gekennzeichnet, daß es den Superabsorber sowie die Verbindung mit großer Oberflächenstruktur in Mengen von jeweils 30 - 70 Gew.% enthält.

5. Streufähiges Bindemittel gemäß einem oder mehreren der Ansprüche 1 bis 4, dadurch gekennzeichnet, daß der Gehalt an Polyglykol bis zu 20Gew.% beträgt.

6. Streufähiges Bindemittel gemäß einem oder mehreren der Ansprüche 1 bis 5, dadurch gekennzeichnet, daß es bis zu 30 Gew.%, besonders bevorzugt bis zu 20 Gew.%, eines grobkörnigen, scharfkantigen Materials enthält.

7. Verfahren zur Herstellung eines streufähigen Bindemittels der Ansprüche 1 bis 6, dadurch gekennzeichnet, daß
   a) die einzelnen Komponenten im gewünschten Mischungsverhältnis abgemischt werden oder
   b) die Verbindung mit großer Oberflächenstruktur dem mechanisch zerkleinerten, wasserhaltigen Superabsorber-Rohprodukt, das durch Gelpolymerisation erhalten wurde, vor dessen Trocknung in entsprechender Menge zugemischt, die Mischung verknetet, getrocknet und gemahlen und gegebenenfalls weitere Komponenten zugemischt werden.

8. Verfahren zum Binden von ausgelaufenen wäßrigen oder nichtwäßrigen Flüssigkeiten oder von Mischungen von wäßrigen und nichtwäßrigen Flüssigkeiten, dadurch gekennzeichnet, daß man ein streufähiges Bindemittel gemäß einem oder mehreren der Ansprüche 1 bis 6 in Kontakt mit der zu bindenden Flüssigkeit bringt.

## Claims

1. Scatterable binder for binding spilled liquids, characterized in that it contains
   a) superabsorbers, that is hydrogen-forming polymers,
   b) compounds with a large surface area and/or a capillary and/or fibrous structure and
   c) polyglycol,
   the content of polyglycol being up to 30% by weight.

2. Scatterable binder according to claim 1, characterized in that the superabsorbers are prepared by polymerization of acrylamide and/or acrylic acid and/or a salt thereof in the presence of up to 2% by weight of bisacrylamidoacetic acid, trimethylolpropane triacrylate and/or tetraallyloxyethane.

3. Scatterable binder according to claim 1 and/or 2, characterized in that compounds with a large surface area and/or a capillary and/or fibrous structure are kieselguhr, peat, sawdust, wood meal, wood wool, straw, paper fibers, pulp or plastics in fibrous or milled form, such as, for example, polyethylene fiber filler or milled polyurethane foam or mixtures thereof.

4. Scatterable binder according to one or more of claims 1 to 3, characterized in that it contains the superabsorber and the compound with a large surface area each in amounts of 30-70% by weight.

5. Scatterable binder according to one or more of claims 1 to 4, characterized in that the content of polyglycol is up to 20% by weight.

6. Scatterable binder according to one or more of claims 1 to 5, characterized in that it contains up to 30% by weight, particularly preferably up to 20% by weight, of a coarse-particled, sharp-edged material.

7. Process for the preparation of a scatterable binder of claims 1 to 6, characterized in that
   a) the individual components are mixed in the desired ratio or
   b) the compound with the large surface area is mixed in an appropriate amount with the mechanically comminuted, water-containing superabsorber crude product, which was obtained by gel polymerization, prior to drying of said product, the mixture is kneaded, dried and milled and optionally further components are admixed.

8. Process for binding spilled aqueous or nonaqueous liquids or mixtures of aqueous or nonaqueous liquids, characterized in that a scatterable binder according to one or more of claims 1 to 6 is brought into contact with the liquid to be bound.

## Revendications

1. Agent liant épandable pour lier des liquides en écoulement, caractérisé en ce qu'il comprend :
   a) des superabsorbeurs, c'est-à-dire des matières polymères formant des hydrogels,
   b) des composés à grande structure de surface et/ou à structure capillaire et/ou fibreuse, et
   c) un polyglycol,
   la teneur en polyglycol pouvant s'élever jusqu'à 30% en poids.

2. Liant épandable selon la revendicaion 1, caractérisé en ce que les superabsorbeurs sont formés par polymérisation d'acrylamide et/ou d'acide acrylique et/ou d'un sel de celui-ci en présence de jusqu'à 2% en poids d'acide bis-acrylamidocétique, de triacrylate de triméthylolpropane et/ou de tétra-allyloxyéthane.

3. Liant épandable selon la revendication 1 et/ou 2, caractérisé en ce qu'il contient comme composés à grande structure de surface et/ou à structure capillaire et/ou fibreuse du Kieselguhr, de la tourbe, de la sciure, farine ou laine de bois, de la paille, des fibres de papier, de la cellulose de bois ou des matières plastiques à l'état fibreux ou broyé, par exemple charges de fibres de polyéthylène ou mousse de polyuréthane broyée, ou encore un mélange de plusieurs de ces matières.

4. Liant épandable selon une ou plusieurs des revendications 1 à 3, caractérisé en ce qu'il contient le superabsorbeur et le composé à grande structure de surface chacun dans des proportions de 30 à 70% en poids.

**5.** Liant épandable selon une ou plusieurs des revendications 1 à 4, caractérisé en ce que sa teneur en polyglycol peut s'élever jusqu'à 20% en poids.

**6.** Liant épandable selon une ou plusieurs des revendications 1 à 5, caractérisé en ce qu'il comprend jusqu'à 30% en poids, de préférence jusqu'à 20%, d'une matière en gros grains à arêtes vives.

**7.** Procédé de préparation d'un liant épandable selon les revendications 1 à 6, procédé caractérisé en ce que :

a) on mélange les divers composants dans les proportions voulues ou bien

b) on mélange dans la proportion correspondante le composé à grande structure de surface au produit brut du superabsorbeur qui a été broyé mécaniquement et contenant de l'eau, produit résultant d'une polymérisation en gel, avant de le sécher, puis on malaxe le mélange, on le sèche et on le broie et le cas échéant on lui ajoute d'autres composants.

**8.** Procédé pour lier des liquides aqueux ou non aqueux en écoulement ou des mélanges de liquides aqueux et non aqueux, procédé caractérisé en ce que l'on met en contact avec le liquide à lier un liant épandable selon une ou plusieurs des revendications 1 à 6.